# EUROPEAN PATENT APPLICATION

(11) **EP 1 439 622 A1**
(43) Date of publication of application: **21.07.2004**
(21) Application number: 01972114.1
(22) Date of filing: 05.10.2001
(51) Int. Cl.: H02B 7/06, E04H 5/04

(54) **COMPACT MODULAR TRANSFORMATION CENTRE**

(71) Applicant: Grupo Ormazabal, S.A., 48170 Zamudio (Vizcaya) (ES)
(72) Inventor: ORMAZABAL OCERIN, Javier, E-48170 ZAMUDIO (Vizcaya) (ES)
(74) Representative: Carpintero Lopez, Francisco
(86) International application number: PCT/ES2001/000370
(87) International publication number: WO 2003/032458

(57) **Abstract**

The transformer substation includes a high voltage equipment (1), a transformer (2) and a low voltage switchboard (3), connected consecutively to each other in the stated order, so that said three components form a group or compact unit as the high voltage equipment (1) and low voltage switchboard (3) are mounted directly on the cover of said transformer. The wiring between the high voltage equipment (1) and the transformer (2) is carried out directly through the protection module (7) with which the electrical transformer substations are equipped, while the wiring between the transformer (2) and the low voltage switchboard (3) is also carried out directly through a vertical continuation of the cover of the transformer, by way of a turret (6), from which the connections (12) to the transformer have access to the exterior and to which the bus bars of the low voltage switchboard (3) are connected directly.

## Description

### OBJECT OF THE INVENTION

The present invention relates to a compact modular transformer substation, the evident purpose of which is that of transforming high voltage electric power, into low voltage electric power for its distribution and consumption.

An object of the invention is to provide an electrical transformer substation which comprising the high voltage protection and operating equipment, the transformer and the low voltage switchboard, is constituted as a modular and compact assembly which suppresses the external connections between these three elements, in such a way that the installation and wiring operations of the substation are simplified considerably, being minimized thereby the electrical faults during the installation, operation and maintenance tasks of the transformer substation, all this in a module of reduced size for which reason the cost of the transformer substation is also reduced to a considerable extent.

The modular and compact substation object of the invention is not constituted as a designed specifically monobloc but rather is composed by the same individual components used in any transformer substation, namely the transformer, high voltage equipment and low voltage switchboard, each of these components maintaining its own separate identity, in such a way that it is possible to dismantle the high voltage gear or the low voltage gear, each element remaining in perfect conditions for use. This characteristic considerably increases the flexibility of the transformer substation in comparison with solutions of monobloc or integrated design.

Also object of the invention are the modifications introduced in the transformer for the purpose of it being able to serve as support for the high voltage equipment and the low voltage switchboard, as well as to allow direct connections to them.

### BACKGROUND OF THE INVENTION

Electrical transformer substations are basically constituted by three elements or fundamental parts, mutually independent, one of which parts is determined by the high voltage equipment, whilst a second part constitutes a transformer, the third part being formed by a low voltage switchboard, so that those parts are independent and are connected electrically.

According to a usual configuration, the high voltage equipment comprises a voltage input and an output, forming a loop, as well as a third position which feeds the transformer, the low voltage output of which is connected to the low voltage distribution equipment from which run the corresponding output cables for distribution and corresponding supply of power to the facility or building in question.

The first two positions of the high voltage equipment receive the cables of the loop. By operating the switchgear of these positions it is possible to vary the configuration of the high voltage circuit and specifically isolate faulted areas in order to restore/maintain service in the healthy remainder of the circuit. The third position of the equipment is constituted by the transformer protection, usually by means of fuses or even by means of automatic circuit breaker.

The function of the fuses is that of preventing electrical faults which can be produced downstream, that is in the low voltage distribution network, in the low voltage switchboard or in the transformer from affecting the high voltage network or causing personal injury or damage to property, limiting in this way the extent of the incident.

Thus, the assembly determined by the high voltage equipment, the transformer and the low voltage switchboard, is usually mounted in a closed room which in most cases corresponds to a basement or annexe of the building which it is wanted to supply, or in an external transformer substation next to the building, which should offer sufficient conditions of safety and ergonomic design for the operatives which are materialized in adequate access or working space for the operation and installation of the equipment.

The main requirement regarding space is the need to have a free frontage of approximately one metre in width both in the high voltage and in the low voltage switchgear, as well as an access corridor and safety distances to elements that are live and can be accessible for operatives or third parties. This means that in practice a relatively large space (approximately 12 square metres) is required for emplacement of all the components of the substation, which can signify a high cost for the electric power distribution company. This is why, at the present time, there is great interest in equipment occupying increasingly reduced space.

Moreover, the electrical connections between the high voltage protection position and the transformer and between the latter and the low voltage switchboard are implemented by means of external wiring which is exposed and capable of giving rise to accidents and breakdowns. Also, this wiring has to be carried out "in situ", which requires specialist workmen to implement the different connections correctly.

In short, the connections between the high voltage operating gear and the transformer are implemented by means of cables with terminals on their ends, the terminals usually being made on site, for which reason they are not subjected to the pertinent trials to check the quality of the joint.

Likewise, the connection between the transformer and the low voltage distribution switchboard is implemented by means of cables with terminals on their ends. On occasions if the terminals are badly made or these terminals are poorly tightened on the low voltage switchboard, it can lead to these connections reaching high temperatures under normal operating conditions. The final result of this situation is usually a fire, this being one of the most dangerous incidents that can occur in a transformer substation, which can even affect nearby housing or buildings.

Furthermore there is the problem of replacing or changing the high voltage fuses. The problem occurs in those maintenance operations where decisions are taken in haste or are not implemented appropriately and result in for example:
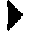 Bad fitting of the fuse, causing a bad contact, and as a consequence excessive heating which finally causes the installation to fail. This incident can lead to the total destruction of the high voltage switchgear.
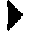 Non-availability of the appropriate fuse rating (according to the power of the transformer). By using another rating, the protection of the transformer is insufficient, with the subsequent risk of breakdown and malfunctioning.
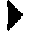 When one fuse blows, the manufacturers of these elements recommend changing the three phases (the three fuses) in case any other of them has been damaged. However, this task usually is not carried out, for which reason in the long term unexpected failures can take place, for no apparent reason.

In summary, it can be said that the electrical transformer substations of the aforementioned type present a number of serious problems, among which the following can be cited:
- An ample space is required for the location of all the components of the substation, with the ensuing economic cost in the acquisition or rental of the basement or annexe.
- The wiring between the different parts or components of the transformer substation, that is, between the cells, the transformer and the low voltage switchboard, is exposed and can lead to accidents and breakdowns.
- The wiring between transformer cells, the transformer itself and the low voltage switchboard, has to be carried out "in situ", which requires specialist workmen to implement the different connections correctly.
- The replacement of the fuses is not always carried out in an adequate manner, with the consequent risk for the installation.

These problems lead to a necessity or tendency to suppress the external connections between the different components, as well as to a reduction in the size thereof, being known at the present time, for example, integrated monobloc solutions, that is, those which externally have the aspect of a single unit which incorporates the high voltage and transformation functions, the high voltage functions and the fuses being housed inside the actual transformer enclosure and therefore immersed in dielectric liquid.

These solutions resolve some of the problems mentioned above but they have the drawback that they have to be designed and manufactured specifically for each requirement, which increases the final price thereof. Also, since the high voltage equipment and the transformer are constituted as a monobloc unit, in the event of a breakdown they have to be withdrawn and replaced in their entirety, which requires having a complete prominenceby equipment, instead of being able to replace only the damaged function. It is necessary also to keep in mind that transformer substations have different working powers and voltages according to the requirement, for which reason a complete range of prominenceby transformer substations has to be available.

As for the protection function, this is habitually carried out by means of fuses which, as has been mentioned, are located in the actual transformer enclosure, so that the reaction is quick in the event of a fault. The fuse is surrounded with dielectric liquid (oil) and for this reason its manufacture has to be oil-tight. The inclusion of the fuses inside the transformer enclosure implies a number of potential risks for the personnel and the equipment for the following reasons:
- An electric arc between the connections of the fuses, upstream, can produce a quantity of energy which results in the enclosure exploding and igniting the dielectric liquid contained in the transformer enclosure.
- If the fuse melts badly it produces excessive heating and the temperatures reached can cause gasification of the dielectric liquid (oil) resulting in an increase of the internal pressure which can cause permanent deformations to the metallic enclosure of the transformer which in turn can develop into in leakage points of the dielectric fluid.
- Breakage of the fuse casing results in detachment of the material which it has on its interior. This material is usually sand which contaminates the dielectric liquid, as well as the live parts of the transformer. This makes it impossible to repair the transformer making use of the core and the windings.

Moreover the actuation of the operating switchgear of the high voltage loop positions, also included inside the enclosure, results in products from decomposition of the dielectric fluid, which in the medium to long term can come to impair the insulation, especially of the transformer.

### DESCRIPTION OF THE INVENTION

The transformer substation disclosed, has been conceived to resolve the foregoing problems, based on a simple but not for this less effective solution, being based on combining in a single compact unit of reduced dimensions, the transformer, the high voltage equipment and the low voltage switchboard, but with the particularity that said reduction in size is modular in character, and is based on the high voltage equipment and the low voltage switchboard being mounted on the actual transformer, which acts as support element carrying the other two units, each one of them maintaining its own independence and functionality.

The electric connections between the three components are direct, that is without external cable straps or terminals, said connections being implemented in the factory, for which reason the exposure thereof to the weather is avoided, and the problems due to the existence of wiring are resolved. Also, these connections are of the plug-in type, which allows the assembling and/or dismantling of the different units when necessary, each independent unit maintaining its functional capability.

The compact transformer substation obtained based on the conjunction of the three components, will occupy a minimum space, thereby reducing the space needed for the installation, only the input and output wiring of the high voltage loop and the output wiring of the low voltage switchboard to the supply network being visible.

The assembly of the high voltage equipment and the low voltage switchboard on the actual transformer, will be implemented directly on the cover of the latter, with the particularity that all the elements necessary for the operation of the transformer substation are located in a vertical plane on the operating panel, which facilitates the operation and maintenance tasks. The fastening of the cells on the transformer cover can also be carried out through a supporting structure of suitable dimensions and configuration to incorporate the pertinent securing means.

The high voltage equipment is mounted literally on the cover of the transformer, the connection being made directly between the third position of the equipment, the position which incorporates the protection function (generally by means of fuses), and the transformer, the cells being mounted vertically, with the control devices on the front to allow easy access for the operatives.

Another connection possibility, intended to resolve the aforementioned problems during the replacement of fuses, is that the high voltage equipment incorporate a removable protection module which holds the fuses of the three phases, and which is prepared for carrying out the change, in a quick and easy manner, of the three fuses simultaneously, thereby impeding assembly errors occurring during the maintenance operations. This protection module serves also for connection between the high voltage equipment and the transformer.

In this case, it has been foreseen that the transformer cover incorporates a set-back prominence, by way of a stand, on which the high voltage equipment is mounted and which incorporates terminals on its front part for the connection, by plugging in the protection module. As for the connection between the protection module and the high voltage equipment, a three-phase connection has been foreseen likewise by means of quick-acting plug-in terminals.

The protection module therefore incorporates the terminals for connection to the high voltage equipment and the transformer, the terminals of each phase being connected internally through the corresponding fuse. This protection module therefore incorporates the three protection fuses and is configured in such a way that when one of the fuses blows, replacement of the three phases is carried out simultaneously in accordance with the manufacturer's instructions, for which reason it is impossible to introduce any type of error.

The electrical connections between the protection module and the high voltage equipment and the transformer are implemented preferably by means of housings or sockets and coupling assemblies, like those described in the European patent 0 520 933 by the same applicant.

The protection module can optionally include current transformers associated with a relay which complements the fuse protection of the system, providing protection functions like earth faults, overloads, short circuits in low voltage, operating on one or two phases for a fuse blowing, measuring current, measuring voltage and power and even temperature and oil level in the transformer. This relay can communicate optionally with an integrated system for remote control which will allow the state of the transformer substation to be queried, as well as the enabling or disabling of the desired protection functions independently.

Likewise, on the set-back prominence on the transformer cover the high voltage regulator and the high-voltage switch are mounted, these elements being located in a vertical plane on the operating panel, providing access from the front and therefore more comfortable for the operative.

Moreover, the connections between the transformer and the low voltage switchboard are implemented through a kind of vertical turret full of dielectric fluid which is built also as a continuation of the transformer, being part thereof, and the connections of which have access to the exterior through the face of the turret, the bus bars of the low voltage module being screwed directly thereto, which bus bars are habitually mounted on the rear part of the switchboard, so that the low voltage switchboard is arranged vertically, suspended from the turret, with all its control elements positioned in front, in this way allowing easy and comfortable access for the operatives. As has been mentioned, the connection is implemented directly, without any type of wiring, but also by means of a snap-fit connection system which allows the assembling and dismantling of the low voltage switchboard to be carried out quickly and comfortably.

Therefore, forming part in the modular and compact substation disclosed, are a high voltage equipment, which can have any type of electric schematic, and a low voltage switchboard conventional insofar as their structure and functionality are concerned, it being the transformer which undergoes modification in order to incorporate the functions of support and direct wiring element, these modifications being the incorporation of individual extensions or continuations of the transformer cover, a vertical piece in turret form, for support and connection of the low voltage switchboard, and a second set-back extension, by way of a stand, for the connection and support of the high voltage equipment.

Clearly, this unification in a single unit of the three basic components which intervene in a transformer substation, allows a reduction in space to be achieved, as well as enhancing the safety, the time for putting into service being diminished since the connections are made in the factory, it being sufficient to locate the unit in the place foreseen for it, in a word the problems and drawbacks cited in the previous section are avoided.

Also, since the transformer substation is constituted in modular form, that is, by several independent units interconnected to each other, when a fault occurs, it is possible to replace the damaged unit quickly, it being possible to carry out this replacement in the actual transformer substation or, preferably, in the factory. In this case, during the time for repair or replacement of the damaged unit, the transformer substation should be replaced with a spare one but, the inherent modularity of the system means it is not necessary to have a different substation for each requirement but instead it is only necessary to have several individual units which are combined, in each case, to constitute the compact transformer substation required. Likewise, the faulty transformer substation is easily reemployed, by replacing not the entirety but merely the damaged unit.

Additionally, as a consequence of the modularity of the system, the system configuration can be varied over time as new requirements arise, for example by adding new positions to the high voltage equipment, without this implying the complete replacement of the transformer substation, as would be necessary in the case of integrated substations. This signifies a very substantial reduction in the times necessary for the disconnection and reconnection of all the external cables, on both low voltage and high voltage sides.

### DESCRIPTION OF THE DRAWINGS

To complete the description that is being made and with the object of assisting in a better understanding of the characteristics of the invention, in accordance with a preferred example of practical embodiment thereof, the same is accompanied with, as an integral part of said description, a set of drawings wherein, by way of illustration and not restrictively, the following has been represented:
Figure 1. - It shows a conventional electrical transformer substation, comprising the high voltage equipment, the transformer, the low voltage switchboard and the connections, by means of the corresponding wiring and terminals between the transformer and the high voltage equipment and the low voltage switchboard.

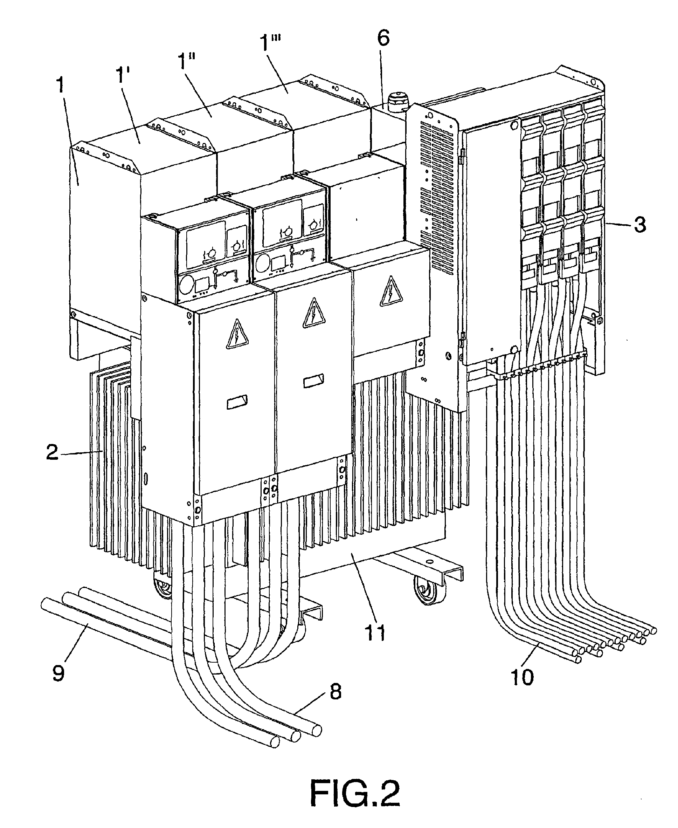

Figure 2. - It shows a representation according to a general perspective of the compact transformer substation implemented in accordance with the object of the present invention.

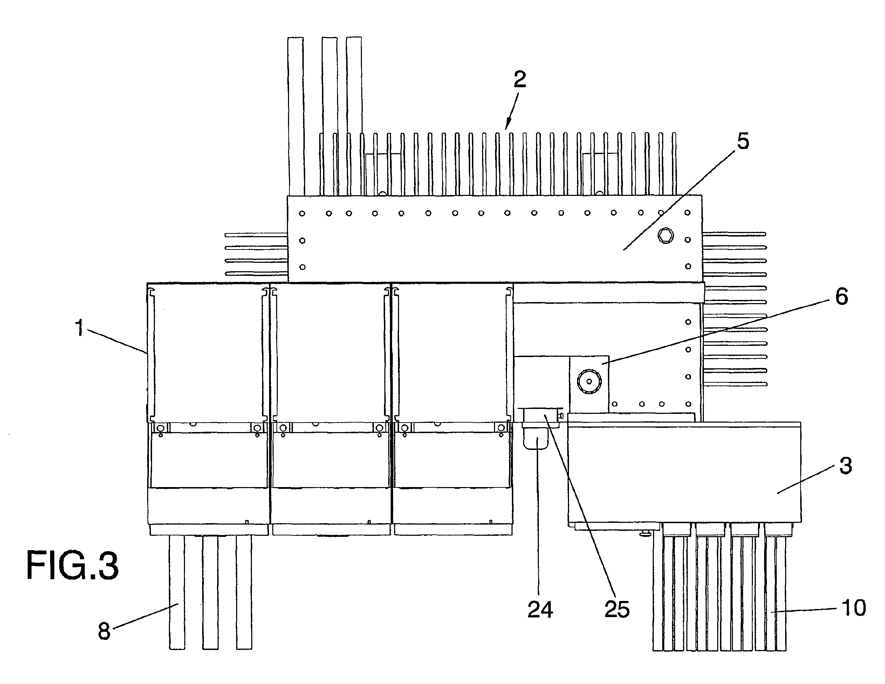

Figure 3. - It shows a plan view of the same transformer substation as shown in the previous figure.

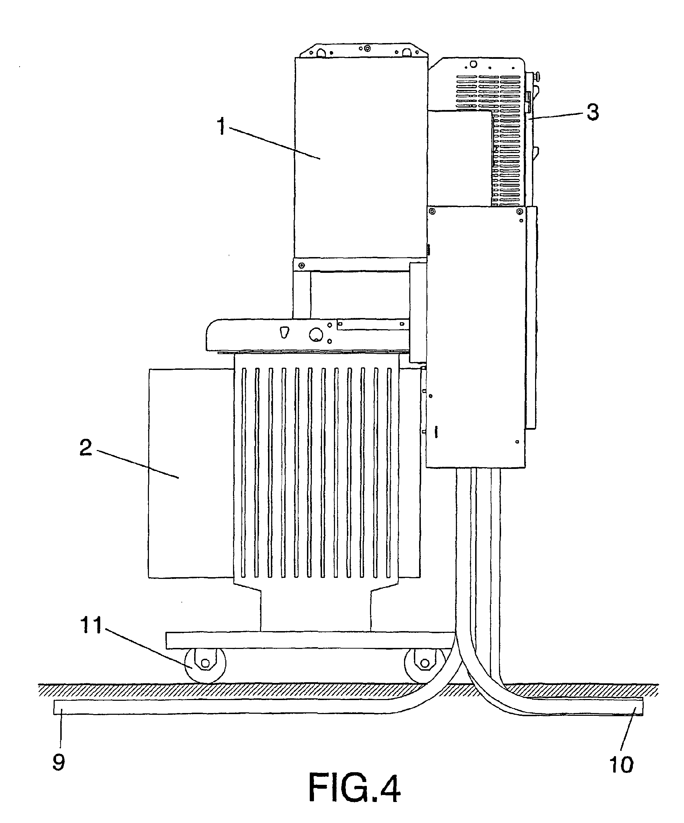

Figure 4. - It shows a view in side elevation of the transformer substation as shown in the two previous figures.
Figure 5. - It shows a detail, in perspective, of the continuation of the cover of the transformer, according to the object of the invention.
Figure 6. - It shows a perspective of the components which constitute the removable protection module.
Figure 7. - It shows a rear view of the removable protection module.
Figure 8. - It shows a representation of the transformer substation, according to the object of the invention, incorporating a removable protection module.
Figure 9. - It shows a detail of a transformer substation, modular and compact, with the protection module withdrawn, the connection terminals of the transformer and of the medium-voltage cells being clearly observed.
Figure 10. - It shows a view in detail of the protection module, properly coupled to the transformer substation.

### PREFERRED EMBODIMENT OF THE INVENTION

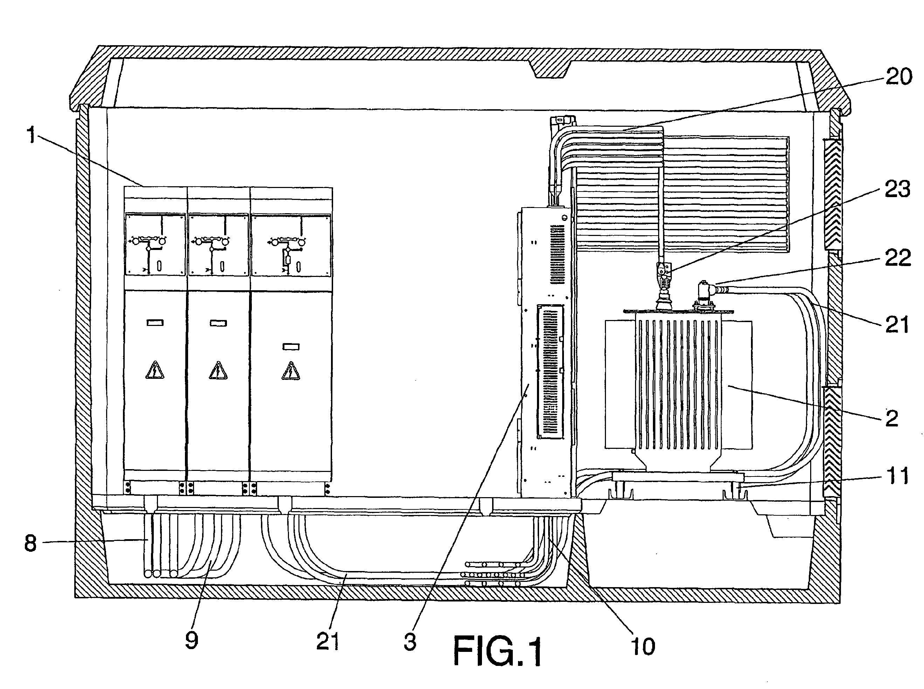

In figure 1 a typical configuration of a transformer substation has been represented, constituted by high-voltage switchgear (1), a transformer (2) and a low voltage switchboard (3), the high voltage equipment (1) being connected to the transformer through the corresponding wiring (21) and terminals (22), while the low voltage switchboard (20) is connected, also to the transformer through the wiring (20) and connection terminal (23). Also represented in this figure are the input (8) and output (9) of the high voltage loop, as well as the low voltage distribution cables which run from the switchboard (20) for the supply of power to the corresponding installation.

So, the compact electrical transformer substation disclosed, includes, as is conventional, a high voltage equipment (1), a transformer (2) and a low voltage switchboard (3), the novelty of the invention being based in that said three components are mounted jointly forming a compact module, wherein the high voltage equipment (1) and the actual low voltage switchboard (3) are mounted directly on the transformer (2), specifically on the actual cover (5) of the transformer (2) however, this assembly is modular, that is, each one of its components preserves its own characteristics and functionality.

The substation includes a kind of turret (6) constituted with a continuation of the transformer, through which the connections are made between said transformer (2) and the low voltage switchboard (3), whilst the wiring between the high voltage equipment (1) and the transformer (2) is implemented in the represented configuration directly through its third position (1"') which constitutes the protection function.

In the figures of this invention, a high voltage equipment has been represented constituted by three high voltage cells or positions (1'), (1") and (1"') but, logically, a greater or lesser number of cells or positions can be used according to the electric layout required. Also, the protection function referred to is implemented by means of fuses, connected to the third position (1") however, the transformer substation of the invention would be equally valid if automatic circuit breakers were used to carry out the protection functions.

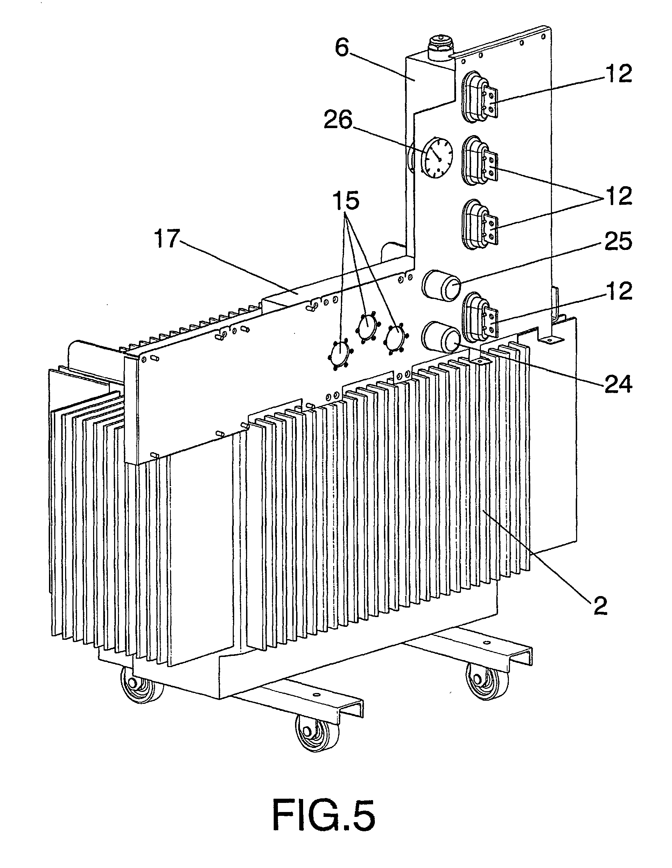

As is observed in figure 5, the turret (6) is constituted as a vertical continuation of the cover of the transformer (2), and therefore it is also full of dielectric fluid, the connections to the transformer being located on its interior, which connections have access to the exterior, by means of the corresponding terminals (12), through the face of the turret (6), the bus bars of the high voltage switchboard (3) being screwed directly to said connections (12). These bus bars are mounted on the rear part of the low voltage switchboard (3), so that the latter is literally suspended from the turret (6), all its control elements being positioned on front, allowing in this way easy and comfortable access for the operatives.

As for the high voltage equipment (1), it is mounted directly on the transformer cover (5), the electrical connection being implemented directly and internally between the transformer and the cell or position which incorporates the protection function.

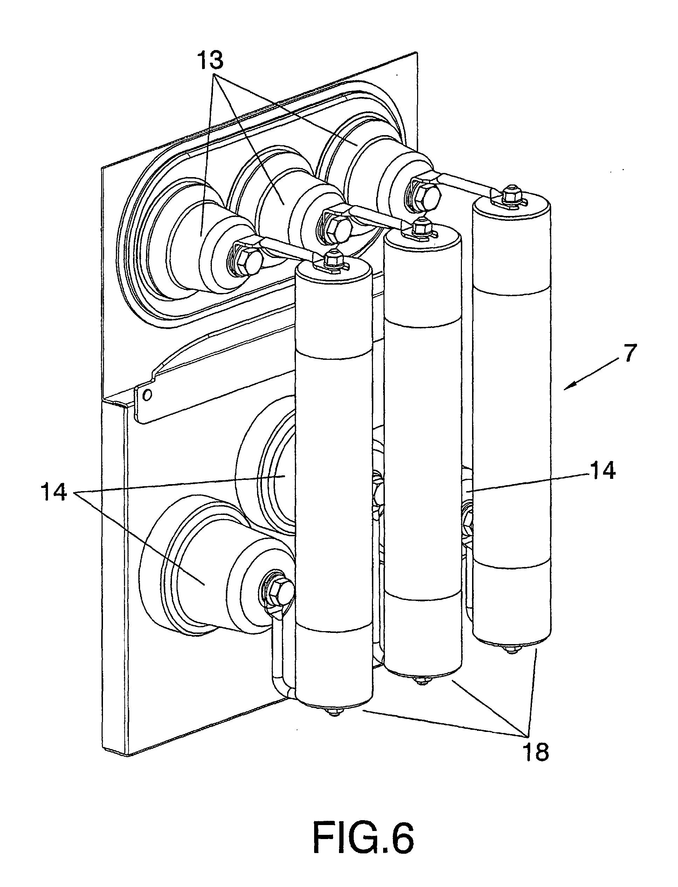

Nevertheless, in a preferred embodiment shown in figures 6, 7, 8, 9 and 10, the connection between the high voltage equipment (1) and the transformer (2) is implemented, through a protection module (7) which incorporates the fuses of the three phases and which in turn interconnects the high voltage equipment directly the cells (1) with the transformer (2). Obviously, in the event that the protection were implemented by means of automatic circuit breaker, it would not be necessary to use the removable protection module (7).

This protection module (7) is constituted preferably by a metallic chassis which incorporates some housings (13) for connection with the high voltage equipment and some housings (14) for connection with the transformer, the pertinent fuse (18) being mounted between each pair of housings, corresponding to the same phase. Logically, both the transformer (2) and the high voltage equipment (1) will also have some electric terminals, in the form of housings which, by means of the corresponding coupling assemblies establish the electrical continuity with the housings of the protection module (7).

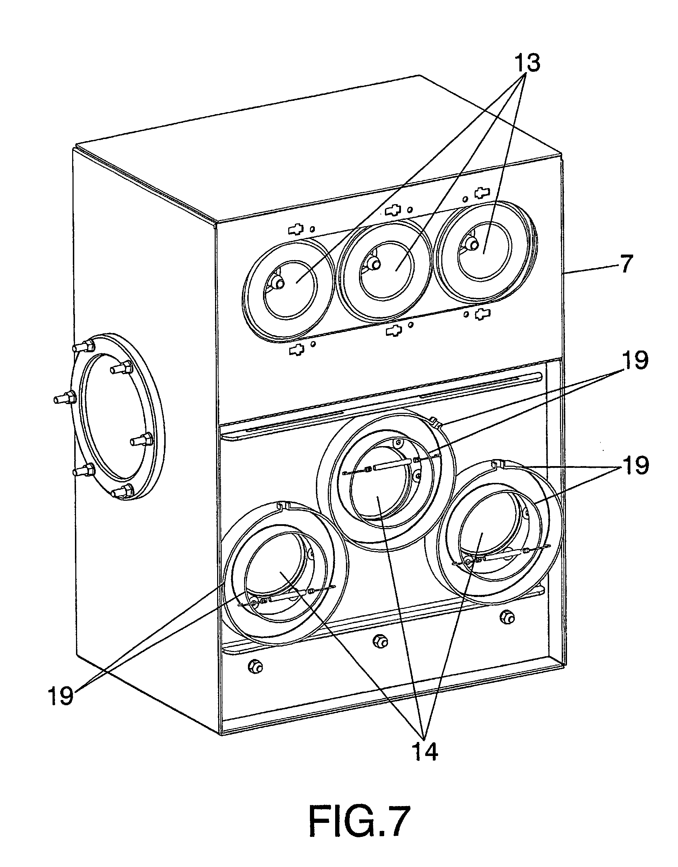

Thus when one of the fuses blows, the protection module (7) is removed and a new module is fitted, whereby the replacement of the three fuses takes place simultaneously, thereby possible errors in the operation are avoided. In figures 6 and 7, a solution has been shown in which the protection module (7) is constituted by means of a single indivisible chassis which carries the fuses (18) of the three phases and their corresponding connection terminals (13) and (14) although, obviously, each fuse with its corresponding plug-in terminals could be constituted as an independent unit, employing in this case means which permit the three units to be fastened to each other so that the operative must always carry out the simultaneous replacement of the three phases.

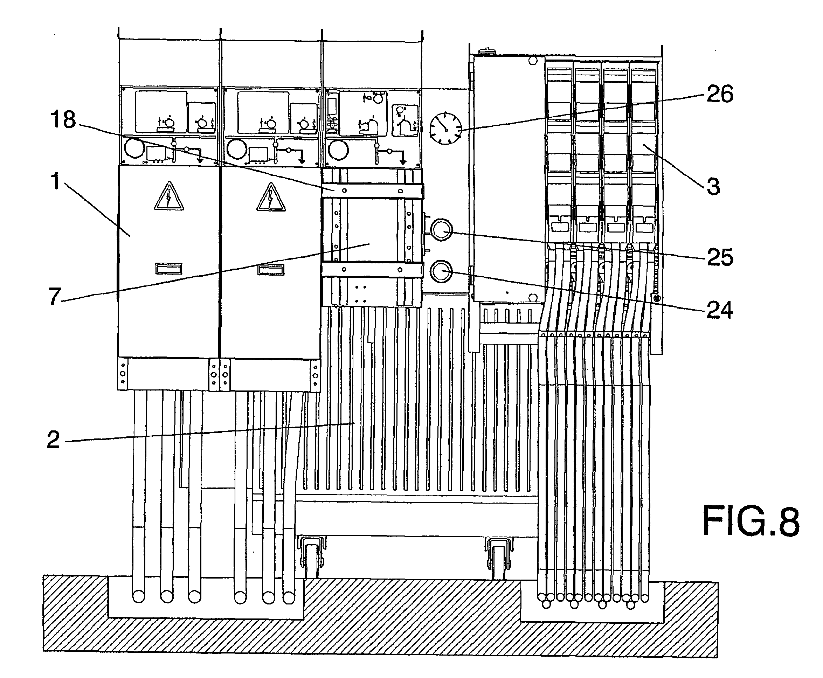

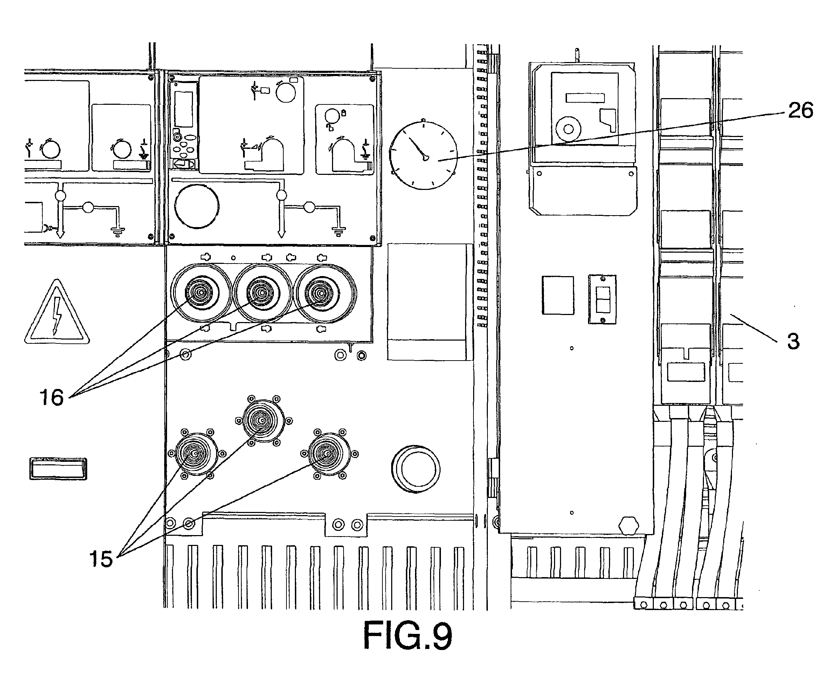

In brief and returning to figure 5, for the incorporation of the module (7) the transformer (2) will have a set-back prominence (17) in its cover (5), by way of a stand, on which the aforementioned housings or connection terminals (15) will be mounted, while the housings (16) of the medium voltage module (1) are mounted on the face of the cell or position (1"'), being in a same vertical plane as the housings (15), in such a way that the protection module (7) is connected and disconnected quickly, by a simple plug-in action and is also in a very accessible front position, as can be observed in figures 8 and 9.

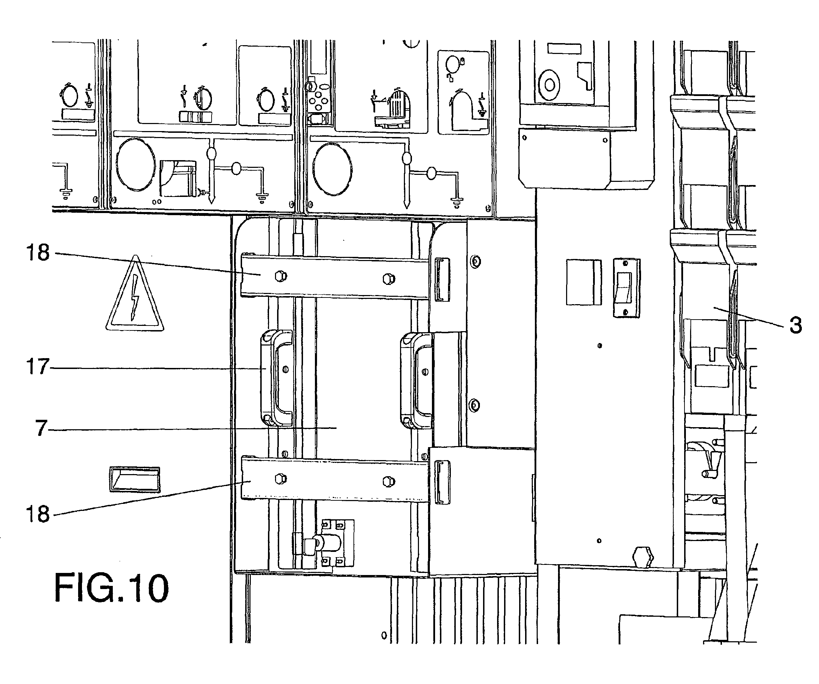

As can be observed in figure 10, the protection module (7) incorporates handles (17) to facilitate its manipulation and some transversal pins (18) which impede the emplacement of a wrong module.

The protection module (7) can optionally incorporate current transformers associated with a relay which complements the protection of the system by fuses, providing protection functions like earth faults, overloads, short circuits in low voltage, operating on one or two phases for a fuse blowing, measuring current, measuring voltage and power and even temperature of the transformer.

In a preferred embodiment, the current transformers are constituted by means of some toroidal windings which are mounted around the connection terminals between the transformer (2) and the protection module (7), for which reason the module mentioned has, in correspondence with the housings (14) some rings or casings (19) in the interior of which are housed the aforementioned toroidal windings.

Also, the relay can communicate optionally with an integrated system of remote control which will allow the state of the transformer substation to be queried, as well as enabling or disabling the desired protection functions independently.

Likewise, on the set-back prominence (17) of the transformer cover (5) the high voltage regulator (24) and the high-voltage switch (25) are mounted, these elements being located in a vertical plane on the operating panel, providing frontal and therefore more comfortable access for the operative.

Also, and with the intention that all the devices for operation and control are perfectly accessible for the operative, it has been foreseen that the thermometer (26) of the transformer be mounted on the front part of the transformer substation.

Finally, it is mentioned that the compact modular assembly forms a unit which can be moved easily inside the transformer substation, because the transformer is mounted on wheels (11).

## Claims

1. Modular compact transformer substation, which including a high voltage equipment, with protection function, a transformer and a low voltage switchboard, the high voltage equipment (1) being connected to the transformer (2) and this to the low voltage switchboard, from which emerge the pertinent cables for distribution and feeding at low voltage of facilities or buildings, is **characterised in that** the three elements corresponding to the high voltage equipment (1), the transformer (2) and low voltage switchboard (3), are mounted jointly determining a compact and modular unit, based on which the high voltage equipment (1) and low voltage switchboard (3) are mounted on the transformer (2) itself, which acts as support element carrying the other two elements (1) and (3), the electrical connections between said three components being carried out in a direct manner, that is without the need to employ strapping with external cables.

2. Compact modular transformer substation, according to claim 1, **characterised in that** the high voltage equipment (1) and the low voltage switchboard (3) are mounted directly on the cover of the transformer (2), both the cells (1) and the switchboard (3) being on a same vertical face, in such a way that all the elements necessary for the operation and maintenance of the substation are mounted approximately in a same vertical and frontal plane which facilitates access to and operation of the same, being included on this front plane the high voltage regulator (24), the high voltage voltage switch (25), the reading and regulation of the transformer thermometer (26) and the reading and regulation of the electronic control relay.

3. Compact modular transformer substation, according to claim 1, **characterised in that** the wiring between the transformer (2) and the high voltage equipment (1) is carried out through a set-back prominence (17) on the cover of the transformer, constituting a kind of raised stand, on which the high voltage equipment is mounted (1), the electric connection being established through some plug-in terminals (15), in such a way that all the operating elements of the cells (1) are mounted on front to facilitate access for the operatives.

4. Compact modular transformer substation, according to claim 1, **characterised in that** the wiring between the transformer (2) and the low voltage switchboard (3) is carried out through a turret (6), constituted as a vertical continuation of the cover of the transformer and filled with dielectric fluid, on the interior of which are the connections to the transformer (2), connections with access to the exterior of the turret (6) through some terminals (12) which are mounted on the front part of the turret (6) and to which are screwed directly the electric contacts of the low voltage switchboard (3) itself, the switchboard being suspended vertically from the turret, in such a way that the control elements are arranged on front to facilitate access for the operatives.

5. Compact modular transformer substation, according to claim 1, **characterised in that** the high voltage protection function is carried out through a removable protection module (7), an internal connection being established between the transformer (2) and the high voltage equipment (1) through said protection module (7).

6. Compact modular transformer substation, according to claims 1 and 5, **characterised in that** the removable protection module (7) incorporates three plug-in terminals (13) for their connection with the high voltage equipment (1) and a like number of other plug-in terminal points (14) for connection to the transformer (2), being mounted between them, in a fixed manner, the corresponding fuses (18), so that the replacement of one or several fuses is carried out by changing the complete protection module, the transformer having for this some plug-in terminals (15) and the medium voltage cell (1"') with the corresponding terminals (16).

7. Compact modular transformer substation according to claims 1, 5 and 6, **characterised in that** the removable protection module (7) includes current transformers associated with a relay which complements the fuse protection of the system, providing protection functions against earth faults, overloads, short circuits in low voltage, operation on one or two phases through a fuse having blown, measuring current, measuring voltage and power and even temperature, it having been foreseen that this relay can communicate with an integrated system of remote control which will allow the state of the transformer substation to be queried, as well as to enable or disable the desired protection functions independently.

8. Compact modular transformer substation, according to claims 1, 5 and 6, **characterised in that** the plug-in connections are of the type of those which are implemented by means of housings or sockets and coupling assemblies.

9. Compact modular transformer substation, according to claims 1, 5 and 6, **characterised in that** on the set-back prominence (17) of the cover (5) of the transformer (2), the high voltage regulator (24) and the high voltage voltage switch (25) are located, these elements being located in a vertical plane on the operating panel, facilitating front and therefore more comfortable access for the operative.

10. Compact modular transformer substation, according to previous claims, **characterised in that** the transformer (2) is mounted on wheels (11) which facilitate the mobility of the assembly or single and compact unit which the high voltage equipment (1), the transformer (2) and the low voltage switchboard (3) form.
